# EUROPEAN PATENT APPLICATION

(11) **EP 1 298 954 A1**
(43) Date of publication of application: **02.04.2003**
(21) Application number: 02256524.6
(22) Date of filing: 20.09.2002
(51) Int. Cl.: H04Q 7/38, H04Q 7/32

(54) **Method for automatically selecting the alert type for a mobile communications device**

(30) Priority: 20.09.2001 US 956725
(71) Applicant: LUCENT TECHNOLOGIES INC., Murray Hill, New Jersey 07974-0636 (US)
(72) Inventor: Byers, Charles Calvin, Wheaton, Illinois 60187 (US); Heck, John Frederick, Wheaton, Illinois 60187 (US); Hinterlong, Stephen Joseph, Elburn, Illinois 60119 (US)
(74) Representative: Buckley, Christopher Simon Thirsk

(57) **Abstract**

A method is provided for automatically selecting the alert type of a mobile electronic device, and a mobile electronic device embodying such technology. The location of the mobile electronic device is determined either by a processor in the mobile electronic device or by the network using triangulation techniques. Based upon the location information, the mobile device changes the alert type. The alert type can be changed to a silent mode, such as vibrate, when the mobile device is located in an area in which an audible alert would be disturbing. The alert type can also be changed to a loud audible alert when the location is a noisy one, such as a factory. The alert type is changed back to its initial value upon leaving the predetermined location.

## Description

### Field Of The Invention

The present invention relates in general to mobile electronic devices, and in particular to automatically selecting the alert type for a mobile electronic device based upon the location of the mobile device.

### Background Of The Invention

Mobile electronic devices, such as cellular telephones, Personal Digital Assistants (PDAs), and pagers, often need to inform their users of various real-time events. Examples of such events include an incoming telephone call, instant message, page, or timer alarm. Traditionally, the devices use audible signaling to alert the user that some action is required to service the event. Many devices have a menu-selected silent option that switches alerts from an audible signal to a vibration mode. Such a silent mode is valuable in social settings such as restaurants, theaters, courtrooms, and churches, where audible signaling would disturb bystanders.

Once an alert is received at a mobile electronic device, the user often can view a caller ID display on the device, and decide to take action (such as answer the call, return the page, or respond to an instant message). A difficulty arises when the user is in a setting where an audible alert from a mobile device would be inappropriate. In such locations, signs are often posted requesting that patrons either turn off their mobile electronic devices, or switch them to a silent mode. However, there is no way to ensure that the mobile devices have been turned off or switched to a non-audible alerting mode. In such scenarios, a mobile device will sound an audible alert, often at an inauspicious moment.

Finally, it is common for users of handheld devices to forget which mode (audible or vibrate) a device is set for. This leads to embarrassment (if audible is selected and the user enters a social setting where ringing devices aren't tolerated), or missed calls (if the device is set to vibrate mode, but is no longer being carried). Further, the user can miss calls if the phone is powered off while in the "quiet" location, and the user may miss a call by forgetting to turn the mobile device back on after leaving the "quiet" location.

Therefore, a need exists for a method and mobile electronic device that is able to alert a user in an area where an audible alert would be inappropriate. Such a method and mobile device should not disturb those around the user of the mobile device. Further, the mobile device should still be operational when located within one of the predetermined locations. The mobile device should also revert to its original alerting mode upon leaving the predetermined location.

### Brief Summary Of The Invention

The above problems can be overcome, and advance made in the art by providing a method and mobile electronic device that automatically selects the alert type for the mobile electronic device based upon the location of the mobile device. Examples of mobile electronic devices include, but are not limited to, cellular telephones, pagers, and PDAs. The mobile device and mobile network can decide when to automatically switch the alerting feature of the mobile device based upon the location of the mobile device. The location of the mobile device can be determined using the GPS location or triangulation capabilities being built into devices and networks to support E911 location, and a database of the locations of places like restaurants, theaters, courtrooms, and churches can be consulted.

Thus, the present invention provides a method and mobile electronic device that is able to alert a user in an area where an audible alert would be inappropriate. This is accomplished by automatically selecting the alert type for the mobile electronic device based upon the location of the device. By changing the alert type to a silent alert, such as a vibrating signal, those around the user of the mobile device are not disturbed. Since only the alert type of the mobile device is changed, the mobile device is still operational while located within the predetermined location. It is also a feature of the present invention that the alert type reverts to the mode in which it was prior to entering the predetermined location upon leaving the predetermined location.

### Brief Description Of The Several Views Of The Drawings

FIG. 1 is a front mechanical view of a cellular telephone in accordance with an exemplary embodiment of the present invention.

FIG. 2 is a flowchart of the automatic enable mode based on the location of a mobile device in accordance with an exemplary embodiment of the present invention.

### Detailed Description Of The Invention

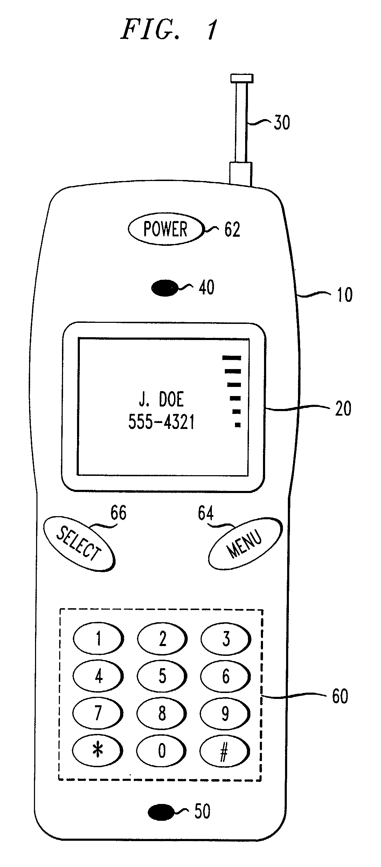

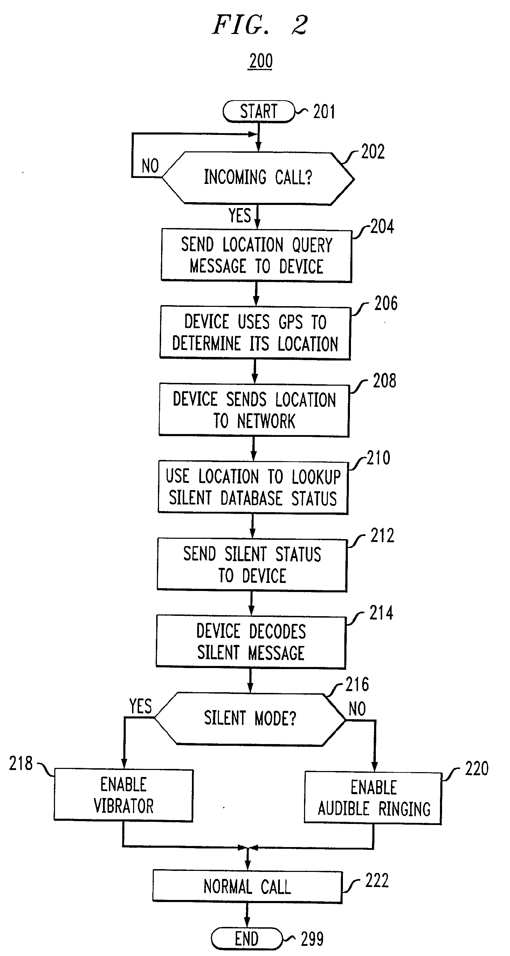

The present invention can be better understood with reference to FIGs. 1 and 2. FIG. 1 is a front mechanical view of a mobile electronic device 10. FIG. 1 depicts mobile device 10 as a cellular telephone, but it should be understood that the scope of this invention also applies to other mobile devices, such as pagers and Personal Digital Assistants (PDAs).

Mobile device 10 includes display 20 for conveying information to the user, antenna 30 to support the radio link to wireless network infrastructure, speaker 40 to produce audio, microphone 50 to receive audio, and numeric keypad 60 to receive the user's numeric input. Mobile device 10 also preferably includes a number of function keys, such as power key 62, menu key 64, and select key 66. Power key 62 is used to toggle between standby and active modes. Menu key 64 invokes various menus on display 20 to configure and control the operation of mobile device 10. Select key 66 is used to choose various options from menus displayed on display 20.

Numeric keypad 60, power key 62, menu key 64, and select key 66 accept input via depression of an individual key. Microphone 50 accepts input by receiving an audible response from a user of mobile device 10 and processing the audible input. This can be accomplished using a speech-to-text converter, voice recognition processing, or other methods of utilizing speech for input.

In operation, the user enables mobile electronic device 10 by depressing power key 62. Various setup and configuration commands are entered using menu key 64 and select key 66 while observing prompts on display 20. Numeric inputs, such as dialed numbers, are entered on numeric keypad 60. Once a call is originated, the user speaks into microphone 50 and listens through speaker 40. Antenna 30, in conjunction with circuitry internal to device 10 (such as radio transmitters and receivers, amplifiers, processors, interfaces and Digital Signal Processors, not shown), provides a radio interface to the base stations and the rest of the mobile network, also not shown.

Turning to FIG. 2, a flow chart 200 of a feature to automatically control the type of alert (either audible or silent/vibrate) that a mobile device will use, depending upon the physical location of the device. Starting at 201, the device and network waits in loop 202 for an incoming call. When a call is detected, the network creates and sends a location query message to the device in block 204.

In step 206, the device determines its geographic position. This determination is preferably made through the same mechanisms used to locate mobile devices for emergency response / call trace / 911 purposes. These mechanisms may include reliance on the Global Positioning System (GPS) Satellite constellation, or using timing and triangulation techniques, as known in the art. The result of this determination is a latitude, longitude, and perhaps altitude value, which are transmitted back to the network in action block 208. If triangulation is being used to determine the location of the mobile device, the mobile device sends a signal to network infrastructure equipment, which calculates the position of the mobile device based upon the timing of the signal(s) received from the mobile device.

In block 210, the network uses the location values to consult a database to determine if there is a silent status set for this area. The database is populated through a survey of an area to determine places where audible ringing may be inappropriate, such as restaurants with "no cell phones" policies, theaters, courtrooms, or churches. The network provider may do this survey as part of their periodic transmission strength surveys. Alternately, property owners of various businesses can contact the network provider and give the coordinates where they wish mobile devices to be silent. In block 212, the silent status of the location is transmitted from the network back to the mobile device. The message is decoded, and any user preferences are applied in block 214. The current user preferences are preferably stored in memory located with the mobile device for later use.

Decision 216 uses the silent status of the device's location to either activate the vibrate mode if the location database calls for silent operation (block 218), or activate the audible ringer in block 220, if the location database suggests that it would be allowed. Alternate embodiments expand the choices of alert types from vibrate or audible to also include low volume for quiet locations, or extra volume for noisy locations. After these steps, a normal call flow progresses in block 222 as known in the art, until the call is terminated in 299.

In the preferred embodiment described above, the mobile device was described as a cellular telephone and voice telephony services. The present invention also applies to pagers, two-way pagers, and Personal Digital Assistants with instant messaging services. The present invention thereby provides a new method and mobile electronic device that can automatically have its alerting changed depending upon the location of the mobile device. The location can be determined using GPS, triangulation, or other location techniques. If the mobile device is located in a location that has been predefined to be one in which a mobile device located therein should have a predetermined alerting, the mobile device can have its alerting changed automatically, without input from the user of the mobile device. For example, if the mobile device is located in a theater and the alerting has been set to "ring", the mobile device or the mobile system can automatically change the alerting to "vibrate" based upon the location of the mobile device. Upon leaving the predetermined location, if the mobile device is now located in a location that is not predetermined to be a "silent" location, the alerting can be set back to its original mode as stored in the mobile device, which in this example is "ring".

The present invention can also change the alerting to an audible mode. For example, a noisy factory can be predefined as a loud location in which all mobile devices should have their alerting changed. In one embodiment, the alerting can be changed to vibrate mode, which would make the noise of the factory irrelevant for call alerting purposes. A second embodiment could change the ringer volume to its maximum setting, thereby increasing the likelihood that the user will hear the alerting, even in the noisy environment.

The present invention can also change the alerting from a loud ringing mode to a quiet ringing mode. This could be done if the user is in a quiet location in which a ring is desired, but a loud ring would be too loud and disruptive. In this case, the alerting mode would be changed to a quiet ringing mode.

While this invention has been described in terms of certain examples thereof, it is not intended that it be limited to the above description, but rather only to the extent set forth in the claims that follow.

## Claims

1. A method for automatically selecting the alert type for a mobile electronic device, the method comprising the steps of:
determining the location of the mobile electronic device; and
determining, based upon the location of the mobile electronic device, an appropriate alert type for the mobile electronic device.

2. A method in accordance with claim 1, wherein the step of determining the location of the mobile electronic device is done by the mobile electronic device, or comprises using a Global Positioning System, or using triangulation techniques.

3. A method in accordance with claim 2, wherein, where the step of determining the location of the mobile electronic device is done by the electronic device, the mobile electronic device transmits the location of the mobile electronic device to a mobile network.

4. A method in accordance with claim 1, wherein the step of determining an appropriate alert type for the mobile electronic device is performed by a mobile network, or comprises consulting a database, assessing property holder requests, or utilizing a survey population database.

5. A method in accordance with claim 1, comprising the step of changing the alert type of the mobile electronic device.

6. A method in accordance with claim 5, wherein the step of changing the alert type of the mobile electronic device comprises changing the alert type to a vibrate mode, changing the alert type to an audible normal mode, changing the alert type to an audible soft mode, or changing the alert type to an audible extra loud mode.

7. A method in accordance with claim 5, comprising the step of reverting to the initial alert type.

8. A mobile electronic device comprising:
a location processor for determining the location of the mobile electronic device; and a processor for determining, based upon the location of the mobile electronic device, an appropriate alert type for the mobile electronic device.

9. A device in accordance with claim 8, comprising a transmitter for sending the location of the mobile electronic device to a mobile network.

10. A device in accordance with claim 8, wherein the location processor for determining the location of the mobile electronic device comprises a Global Positioning System.
